# EUROPÄISCHE PATENTSCHRIFT

(11) **EP 1 062 439 B1**
(45) Veröffentlichungstag und Bekanntmachung des Hinweises auf die Patenterteilung: **07.08.2002**
(21) Anmeldenummer: 99939212.9
(22) Anmeldetag: 01.02.1999
(51) Int. Cl.: F16H 61/12

(54) **AUTOMATIKGETRIEBE IN KRAFTFAHRZEUGEN**
AUTOMATIC GEARBOX FOR MOTOR VEHICLES
BOITE AUTOMATIQUE POUR AUTOMOBILES

(30) Priorität: 11.03.1998 DE 19810479
(43) Veröffentlichungstag der Anmeldung: 27.12.2000
(73) Patentinhaber: Bayerische Motoren Werke Aktiengesellschaft, 80788 München (DE)
(72) Erfinder: NEUNER, Josef, D-83064 Raubling (DE); EHRMAIER, Rudolf, D-81927 München (DE)
(74) Vertreter: Wesel-Mair, Julia (DE)
(86) Internationale Anmeldenummer: EP9900632
(87) Internationale Veröffentlichungsnummer: WO9946520

(56) Entgegenhaltungen:
- EP-A- 0 444 676
- EP-A- 0 798 497
- WO-A-94/06651
- PATENT ABSTRACTS OF JAPAN vol. 015, no. 217 (M-1120), 4. Juni 1991 & JP 03 061760 A (AISIN AW CO LTD), 18. März 1991

## Beschreibung

Die Erfindung bezieht sich auf ein Automatikgetriebe in Kraftfahrzeugen nach dem Oberbegriff des Patentanspruchs 1.

Von einem derartigen Automatikgetriebe geht beispielsweise die DE 196 25 019 A1 aus. Hieraus ist ein elektrisches Fahrstufenwählelement in Form eines Wählhebels bekannt, der entlang der Richtungen eines rechtwinkligen Achsenkreuzes bewegbar ist. Der Wählhebel ist mit elektrischen Schaltelementen versehen, durch die die jeweils angewählte Fahrstufe, z. B. P, R, N und D, als elektrisches Signal an das elektronische Getriebesteuergerät übermittelt wird. Das Getriebesteuergerät steuert entsprechend der angewählten Fahrstufe die erforderlichen hydraulischen und/oder mechanischen Aktuatoren an, um die angewählte Fahrstufe einzulegen. Das elektrische Fahrstufenwählelement kann unabhängig von der Getriebemechanik und von der Getriebehydraulik sein und lediglich elektrisch mit dem Getriebesteuergerät verbunden sein,

In der EP 0 798 497 A1 ist eine Überwachungsvorrichtung in einem Automatikgetriebe in Kraftfahrzeugen mit einem elektronischen Getriebesteuergerät und mit einem elektrischen Fahrstufenwählelement beschrieben, wobei bei einem Ausfall des Getriebesteuergeräts in der Weise, das kein Schaltvorgang mehr möglich ist, auch bei Betätigung des Fahrstufenwählelements im Sinne einer Fahrstufenänderung eine entsprechende auf diesen Ausfall hinweisende optische oder akustische Rückmeldung an den Fahrer ausgegeben wird.

Die JP 03-061760 A beschreibt eine Ausfallüberwachungsvorrichtung für ein Fahrstufenwählelement, wobei, wenn bei einem Ausfall des Fahrstufenwählelements die einstellbaren Fahrstufen nicht mehr erkennbar sind, unverzüglich eine auf diesen Ausfall hinweisende optische, akustische oder haptische Rückmeldung an den Fahrer ausgegeben wird.

Sowohl die EP 0 798 497 A1 als auch die JP 03-061760 A beschäftigen sich mit dem Einstellen eines sicheren Betriebszustandes beim Auftreten eines Fehlers im Rahmen der Automatikgetriebesteuerung. Es ist in beiden Schriften keine differenzierte Rückmeldung an den Fahrer bei Ausfall einer der Komponenten eines elektronisch gesteuerten Automatikgetriebes vorgesehen.

Es ist Aufgabe der Erfindung, den Fahrer bei Ausfall der elektrischen Komponenten differenziert, aber nur wenn zwingend erforderlich, zu warnen.

Diese Aufgabe wird durch die Merkmale des Patentanspruchs 1 gelöst. Vorteilhafte Weiterbildungen der Erfindung sind die Gegenstände der Unteransprüche.

Erfindungsgemäß wird bei einem Ausfall des Getriebesteuergeräts, insbesondere während der Fahrt, in der Weise, daß kein Schaltvorgang mehr möglich ist, bei Betätigung des Fahrstufenwählelements im Sinne einer Fahrstufenänderung, wenn die durch das Fahrstufenwähelement einstellbaren Fahrstufen (P, R, N, D) zumindest noch von einem Kombi-Instrument erkennbar sind, eine entsprechende auf diesen Ausfall hinweisende optische, akustische und / oder haptische Rückmeldung an den Fahrer ausgegeben.

Zusätzlich kann bei einem Ausfall des Fahrstufenwählelements in der Weise, daß die durch das Fahrstufenwählelement einstellbaren Fahrstufen nicht mehr erkennbar sind, unverzüglich eine entsprechende auf diesen Ausfall hinweisende optische, akustische und / oder haptische Rückmeldung an den Fahrer ausgegeben.

Vorzugsweise findet die optische, akustische und / oder haptische Rückmeldung bei Ausfall durch eine optische, akustische und / oder haptische Reaktion im Fahrzeug statt, die sich der optischen, akustischen und/oder haptischen Reaktion im fehlerfreien Fall entgegengesetzt verhält.

Auch kann die optische Rückmeldung bei Ausfall eine differenzierte Fehlermeldung oder eine Anleitung zum Handeln sein.

in einer vorteilhaften Weiterbildung ist die optische Rückmeldung bei Ausfall das Ausbleiben einer im fehlerfreien Fall bei jeder erfolgreichen Betätigung des Fahrstufenwählelements ausgegebenen Anzeige. Eine derartige Anzeige kann beispielsweise im fehlerfreien Fall die Anzeige der angewählten Fahrstufen oder eine Blinklampe sein, die bei jeder erfolgreichen Betätigung des Fahrstufenwählelements aufblinkt.

Die akustische Rückmeldung bei Ausfall ist vorzugsweise das Ausbleiben eines im fehlerfreien Fall bei jeder erfolgreichen Betätigung des Fahrstufenwählelements ausgegebenen Quittiertones.

Die haptische Rückmeldung bei Ausfall ist vorzugsweise die spürbare Erhöhung oder Reduzierung der für die Betätigung des Fahrstufenwählelements erforderlichen Betätigungskraft.

Zusätzlich kann im Stillstand des Fahrzeuges eine wiederholte Rückmeldung an den Fahrer ausgegeben werden, um ihn erneut an den Ausfall zu erinnern. Der Stillstand des Fahrzeuges kann über das im Kraftfahrzeug ohnehin vorliegende Signal der Fahrzeuggeschwindigkeit v erkannt werden. Ebenso kann im Stillstand des Fahrzeuges bzw. bei einer Fahrzeuggeschwindigkeit v von 0 km/h das Weiterfahren verhindert werden. Hierzu wird beispielsweise der Motor automatisch abgestellt, die Feststellbremse automatisch angezogen oder die Parksperre automatisch eingelegt.

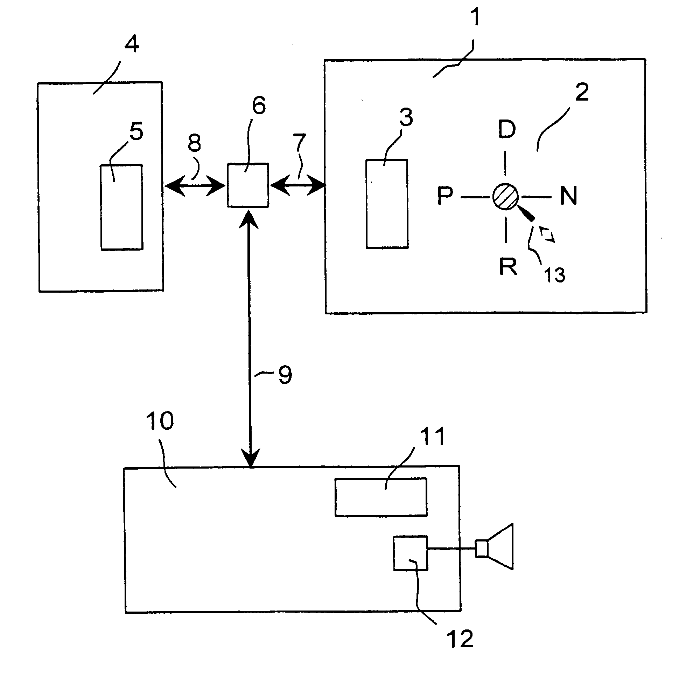

In der Zeichnung ist ein Ausführungsbeispiel der Erfindung dargestellt. Sie zeigt ein erfindungsgemäßes Automatikgetriebe, das zum einen mit einem unabhängigen elektrischen Fahrstufenwählelement und mit einem Kombi-Instrument für die optische oder akustische Rückmeldung verbunden ist.

In einem Schaltblock 1, der beispielsweise im Lenkrad oder in der Mittelkonsole eines Fahrzeug-Innenraums angebracht sein kann, ist ein unabhängiges elektrisches Fahrstufenwählelement integriert, das ein Bedienteil 2 und ein Wählelementsteuergerät 3 aufweist. Der Schaltblock 1 ist vorzugsweise über Datenbusverbindungen 7, 8 mit dem Getriebesteuergerät 5 eines Automatikgetriebes 4 elektrisch verbunden. Die Datenbusverbindungen 7, 8 sind über ein Gateway 6 mit einem Datenbus 9 verbunden, der zu einem Kombi-Instrument 10 führt. Das Kombi-Instrument 10 weist eine Anzeige 11 und eine Tonerzeugungseinheit 12 auf. Das Kombi-Instrument 10 kann darüber hinaus die üblichen Instrumentenanzeigen, wie z. B. ein Tachometer oder eine Drehzahlanzeige, enthalten. Das Bedienteil 2 des elektrischen Fahrstufenwählelements ist entlang der Richtungen eines rechtwinkligen Achsenkreuzes bewegbar. Das Bedienteil 2 ist mit elektrischen Schaltelementen versehen (hier nicht dargestellt), durch die die jeweils anwählbaren Fahrstufen P, R, N und D als elektrische Signale über die Busverbindungen 6, 7, 8, 9 an das elektronische Getriebesteuergerät 5 und/oder an das elektronische Kombi-Instrument 10 übermittelt werden.

Im fehlerfreien Fall steuert das Getriebesteuergerät 5 entsprechend der angewählten Fahrstufen die erforderlichen hydraulischen und/oder mechanischen Aktuatoren des Automatikgetriebes 4 an, um die angewählten Fahrstufen und Gänge einzulegen. Das elektrische Fahrstufenwählelement 2, 3 ist unabhängig von der Getriebemechanik und von der Getriebehydraulik. Weiterhin wird im fehlerfreien Fall über die Anzeige 11 des Kombi-Instruments 10 die jeweils angewählte Fahrstufe P, R, N oder D angezeigt. Auch könnte die Anzeige 11 eine Blinklampe sein, die bei jeder erfolgreichen Betätigung des Fahrstufenwählelements 2, 3 aufleuchtet. Alternativ oder zusätzlich kann im fehlerfreien Fall über die Tonerzeugungseinheit 12 bei jeder erfolgreichen Betätigung des Fahrstufenwählelements 2, 3 ein angenehmer Quittierton erzeugt werden. Ebenfalls altemativ oder zusätzlich kann mit dem Bedienteil 2 eine Kraftverstellvorrichtung 13 zusammenwirken, die im fehlerfreien Fall eine ergonomisch angenehme Betätigungskraft einstellt, die zum Verstellen des Bedienteils 2 vom Fahrer aufgewandt werden muß. Das Bedienteil 2 weist vorzugsweise eine Mittelstellung (schraffierter Kreis) auf, in die das Bedienteil nach jeder Betätigung des Fahrstufenwählelements in Richtung P, R, N oder D wieder zurückgestellt wird. Die Kraftverstellvorrichtung 13 stellt die Betätigungskraft ein, die notwendig ist, um aus der Mittelstellung in eine Fahrstufenstellung übergehen zu können.

Fällt nun beispielsweise das Getriebesteuergerät 5 während der Fahrt in der Weise aus, daß kein Schaltvorgang mehr möglich ist, wird erfindungsgemäß abgewartet, bis das Fahrstufenwählelement 2, 3 im Sinne einer Fahrstufenänderung betätigt wird; d. h. wurde z. B. vor Ausfall des Getriebesteuergeräts 5 mittels des Fahrstufenwählelements 2, 3 die Fahrstufe D (Vorwärtsfahrt) angewählt, und wird nach Ausfall des Getriebesteuergeräts 5 beispielsweise die Fahrstufe R angewählt, liegt ein Beispiel einer Fahrstufenänderung vor. Voraussetzung hierfür ist, daß das Fahrstufenwählelement nicht ausgefallen ist und die durch das Fahrstufenwählelement einstellbaren Fahrstufen zumindest noch vom Kombi-Instrument 10 erkennbar sind. Wird also eine Fahrstufenänderung angefordert, wird daraufhin eine Rückmeldung an den Fahrer ausgegeben, die ihn auf den Ausfall des Getriebesteuergeräts 5 hinweist. Hierzu kann eine optische Rückmeldung dadurch vorgenommen werden, daß die Anzeige 11 entgegengesetzt ihrer Reaktion im fehlerfreien Fall nicht mehr aufleuchtet oder blinkt. Alternativ oder zusätzlich kann die Tonerzeugungseinheit 12 ebenfalls derart angesteuert werden, daß der üblicherweise ausgegebene Quittierton ausbleibt. Als haptische Rückmeldung wird die Kraftverstellvorrichtung 13 beispielsweise in der Weise angesteuert, daß die notwendige Betätigungskraft im Sinne einer Blockierung des Bedienteils 2 erhöht wird oder im Sinne eines Leergangs auf Null reduziert wird. Durch diese optischen, akustischen und /oder haptischen Reaktionen, die den Reaktionen im fehlerfreien Fall entgegengesetzt sind, wird der Fahrer nicht nur allgemein über den Ausfall irgendeiner Komponente informiert, sondern auch darüber, welche Komponente ausgefallen ist. Um den Fahrer zwar frühzeitig aber nicht unnötig auf den Ausfall hinzuweisen, wird vor dem Ausgeben der Rückmeldung erst die Betätigung des Fahrstufenwählelements im Sinne einer Fahrstufenänderung abgewartet.

Liegt der Ausfall des Fahrstufenelements in der Weise vor, daß die durch das Fahrstufenwählelement einstellbaren Fahrstufen zumindest vom Getriebesteuergerät 5 nicht mehr erkennbar sind, wird unverzüglich eine entsprechende auf diesen Ausfall hinweisende optische, akustische und/oder haptische Rückmeldung an den Fahrer ausgegeben. Diese Rückmeldung kann sich von der bei Ausfall des Getriebesteuergeräts 5 unterscheiden.

Beispielsweise kann in allen Fehlerfällen über die Anzeige 11 oder eine andere Fehleranzeige eine differenzierte Fehlermeldung oder eine Anleitung zum weiteren Handeln ausgegeben werden.

Bei einem Neustart des Fahrzeuges nach einem Ausfall oder wenn das Fahrzeug nach einem Ausfall zum Stillstand kommt, wird die entsprechende Rückmeldung wiederholt, um den Fahrer an den Ausfall zu erinnern.

Vorzugsweise wird das Weiterfahren verhindert, wenn das Getriebesteuergerät 5 und damit das Automatikgetriebe 4 nur noch im Notprogramm, z. B. ausschließlich Vorwärtsfahrt im vierten Gang, fahrbar ist. Zur Verhinderung der Weiterfahrt kann beispielsweise nach einem Neustart die Brennkraftmaschine automatisch wieder abgestellt werden. Aber auch das automatische Einlegen der Feststellbremse und/oder der Parksperre kann ein Losfahren des Fahrzeugs verhindern.

Durch dieses erfindungsgemäße Automatikgetriebe wird die Sicherheit bei Ausfall einer elektronischen Komponente, die für das fehlerfreie Funktionieren eines Automatikgetriebes notwendig ist, erhöht.

## Patentansprüche

1. Automatikgetriebe in Kraftfahrzeugen mit einem elektronischen Getriebesteuergerät, mit einem elektrischen Fahrstufenwählelement und mit einem Kombi-Instrument, **dadurch gekennzeichnet, dass** bei einem Ausfall des Getriebesteuergeräts (**5**) in der Weise, dass kein Schaltvorgang mehr möglich ist, bei Betätigung des Fahrstufenwählelements (**2**) im Sinne einer Fahrstufenänderung, wenn die durch das Fahrstufenwählelement (**2**, **3**) einstellbaren Fahrstufen (P, R, N, D) zumindest noch vom Kombi-Instrument erkennbar sind, eine entsprechende auf diesen Ausfall hinweisende optische, akustische und / oder haptische Rückmeldung an den Fahrer ausgegeben wird.

2. Automatikgetriebe nach Anspruch 1, **dadurch gekennzeichnet, dass** bei intaktem Getriebesteuergerät (**5**) aber bei einem Ausfall des Fahrstufenwählelements (**2**, **3**) in der Weise, dass die durch das Fahrstufenwählelement (**2**, **3**) einstellbaren Fahrstufen (P, R, N, D) zumindest vom Getriebesteuergerät (**5**) nicht mehr erkennbar sind, unverzüglich eine entsprechende auf diesen Ausfall hinweisende optische Rückmeldung über dieselbe Anzeige (**11**) an den Fahrer ausgegeben wird, die für die Rückmeldung eines Ausfalls des Getriebesteuergeräts (**5**) verwendet wird.

3. Automatikgetriebe nach Patentanspruch 1 oder 2, **dadurch gekennzeichnet, dass** die optische, akustische und / oder haptische Rückmeldung bei Ausfall durch eine optische, akustische und / oder haptische Reaktion im Fahrzeug stattfindet, die sich der optischen, akustischen und / oder haptischen Reaktion im fehlerfreien Fall entgegengesetzt verhält.

4. Automatikgetriebe nach Patentanspruch 1 oder 2, **dadurch gekennzeichnet, dass** die optische Rückmeldung bei Ausfall eine differenzierte Fehlermeldung und / oder eine Anleitung zum Handeln ist.

5. Automatikgetriebe nach einem der Patentansprüche 1 bis 3, **dadurch gekennzeichnet, dass** die optische Rückmeldung bei Ausfall das Ausbleiben einer im fehlerfreien Fall bei jeder erfolgreichen Betätigung des Fahrstufenwählelements (**2**) ausgegebenen Anzeige (**11**) ist.

6. Automatikgetriebe nach einem der Patentansprüche 1 bis 3, **dadurch gekennzeichnet, dass** die akustische Rückmeldung bei Ausfall das Ausbleiben eines im fehlerfreien Fall bei jeder erfolgreichen Betätigung des Fahrstufenwählelements (**2**) ausgegebenen Quittiertons ist.

7. Automatikgetriebe nach einem der Patentansprüche 1 bis 3, **dadurch gekennzeichnet, dass** die haptische Rückmeldung bei Ausfall die Erhöhung oder Reduzierung der für die Betätigung des Fahrstufenwählelements (**2**) erforderliche Betätigungskraft ist.

8. Automatikgetriebe nach einem der Patentansprüche 1 bis 7, **dadurch gekennzeichnet, dass** im Stillstand des Fahrzeugs eine wiederholte Rückmeldung an den Fahrer ausgegeben wird.

9. Automatikgetriebe nach einem der Patentansprüche 1 bis 8, **dadurch gekennzeichnet, dass** im Stillstand des Fahrzeugs das Weiterfahren verhindert wird.

## Claims

1. An automatic gear mechanism for a motor vehicle comprising an electronic gear control unit, an electric gear selection element and a multi-purpose instrument, **characterised in that** in the event of a failure of the gear control unit (5) such that no gear-shifting is possible, and if the selection element (2) is actuated for the purpose of gear changing and the gears (P, R, N, D) engageable by the selection element (2, 3) are still recognisable at least by the multi-purpose instrument, an optical, acoustic and/or tactile signal indicating the fault is sent to the driver.

2. An automatic gear mechanism according to claim 1, **characterised in that** if the gear control unit (5) is intact but the gear selection element (2, 3) has failed so that the gears (P, R, N, D) engageable by the selection element (2, 3) are no longer recognisable, at least by the control unit (5), an optical signal indicating the said fault is sent without delay to the driver via the same display unit (11) used for indicating a failure of the gear control unit (5).

3. An automatic gear mechanism according to claim 1 or 2, **characterised in that** in the event of a failure the optical, acoustic and/or tactile signal is in the form of an optical, acoustic and/or tactile reaction in the vehicle of opposite nature to the optical, acoustic and/or tactile reaction in the absence of a fault.

4. An automatic gear transmission according to claim 1 or 2, **characterised in that** the optical signal in the event of a fault is a differentiated fault report and/or comprises practical instructions.

5. An automatic gear transmission according to any of claims 1 to 3, **characterised in that** the optical signal in the event of a failure comprising the absence of a display (11) which in the absence of a fault is output after every successful actuation of the gear selection element (2).

6. An automatic gear mechanism according to any of claims 1 to 3, **characterised in that** the acoustic signal in the event of a failure is the absence of an acknowledgement tone which in the absence of a fault is output after each successful actuation of the gear selection element (2).

7. An automatic gear transmission according to any of claims 1 to 3, **characterised in that** the tactile signal in the event of a failure is an increase or reduction in the force needed for actuating the gear selection element (2).

8. An automatic gear mechanism according to any of claims 1 to 7, **characterised in that** if the vehicle comes to a stop, a repeat signal is sent to the driver.

9. An automatic gear mechanism according to any of claims 1 to 8, **characterised in that** if the vehicle stops, it is prevented from moving further.

## Revendications

1. Boîte automatique de véhicule automobile, comprenant un appareil de commande de la boîte équipé d'un élément électrique de sélection du rapport et d'un instrument combiné,
**caractérisée en ce qu'**
en cas de défaillance de l'appareil de commande de la boîte (5) faisant qu'un changement de vitesse n'est plus possible en actionnant l'élément de sélection du rapport (2) dans le sens d'une modification de ce rapport, si les rapports( P, R, N, D) qui peuvent être réglés par l'élément de sélection du rapport (2, 3) peuvent encore être reconnus par au moins l'instrument combiné, une information optique, acoustique et/ou tactile correspondante indiquant cette défaillance est adressée au conducteur.

2. Boîte automatique selon la revendication 1,
**caractérisée en ce que**
si l'appareil de commande de boîte (5) est intact mais que se produit une défaillance de l'élément de sélection du rapport (2, 3) faisant que les rapports (P, R, N D) réglables par l'élément de sélection du rapport (2, 3) ne peuvent plus être reconnus au moins par l'appareil de commande (5), immédiatement une information optique correspondante indiquant cette défaillance est adressée au conducteur par l'intermédiaire du même dispositif d'affichage (11) que celui utilisé pour informer d'une défaillance de l'appareil de commande (5).

3. Boîte automatique selon l'une quelconque des revendications 1 ou 2,
**caractérisée en ce que**
l'information optique, acoustique et/ou tactile donnée dans le cas de défaillance, a la forme d'une réaction optique, acoustique et/ou tactile inverse de la réaction optique, acoustique et/ou tactile dans le véhicule quand il n'y a pas de défaillance.

4. Boîte automatique selon l'une quelconque des revendications 1 ou 2,
**caractérisée en ce que**
l'information optique en cas de défaillance est à considérer comme une information de défaut et/ou une instruction.

5. Boîte automatique selon l'une quelconque des revendications 1 à 3,
**caractérisée en ce que**
l'information optique en cas de défaillance est l'absence de l'affichage (11) qui a lieu, en l'absence de défaillance, quand on actionne avec succès l'élément sélecteur du rapport (2).

6. Boîte automatique selon l'une quelconque des revendications 1 à 3,
**caractérisée en ce que**
l'information acoustique en cas de défaillance est l'absence du signal sonore de confirmation qui est émis quand, en l'absence de défaillance, on actionne avec succès l'élément sélecteur du rapport (2).

7. Boîte automatique selon l'une quelconque des revendications 1 à 3,
**caractérisée en ce que**
l'information tactile en cas de défaillance est l'augmentation ou la réduction de la force nécessaire pour actionner l'élément de sélection de rapport (2).

8. Boîte automatique selon l'une quelconque des revendications 1 à 7,
**caractérisée en ce que**
quand le véhicule est à l'arrêt, une information répétée est donnée au conducteur.

9. Boîte automatique selon l'une quelconque des revendications 1 à 8,
**caractérisée en ce que**
quand le véhicule est à l'arrêt, il est empêché de repartir.
